# EUROPEAN PATENT APPLICATION

(11) **EP 2 698 715 A2**
(43) Date of publication of application: **19.02.2014**
(21) Application number: 13180421.3
(22) Date of filing: 14.08.2013
(51) Int. Cl.: G06F 9/50

(54) **Method and apparatus for generating and utilizing a cloud service-based content shortcut object**

(30) Priority: 17.08.2012 KR 20120089912
(71) Applicant: Samsung Electronics Co., Ltd, Gyeonggi-do 443-742 (KR)
(72) Inventor: Kim, Jinyong, 443-742 Gyeonggi-do (KR); Shin, Youngsun, 443-742 Gyeonggi-do (KR)
(74) Representative: Birchenough, Lewis

(57) **Abstract**

Amethod and apparatus generate and utilize a shortcut object providing direct access to the content view of the content items stored in a cloud server for sharing. A shortcut object generation method of a terminal served by a cloud server includes receiving a first information related to a first content view screen presenting objects representing content stored in a cloud server; displaying the first content view screen based on the first information; detecting aninput signal requesting generation of a shortcut object on the first content view screen; extracting a second information related to the shortcut object from the first information; and generating the shortcut object for providing access to a second content view screen based on the second information, with the shortcut object including an access address to request the second content view screen.

## Description

### BACKGROUND OF THE INVENTION

### 1. Field of the Invention

The present invention relates to a cloud service-based content shortcut object generation and usage method and, in particular, to a method and apparatus for generating and utilizing a shortcut object providingdirect access to the content view of the content items stored in a cloud server for sharing.

### 2. Description of the Related Art

With the advance of communication technologies, mobile terminals such as a smartphone and a tablet PC are widespread. The mobile terminals are integrating various functions as well as the basic voice call and texting functions, and are diversified from the viewpointof size, design, resolution, and user interfaces.

Mobile terminals in the prior art are designed to support a cloud service for sharing content. The cloud service is a service which allows the users to upload and download user content such as movies, photos, music files, and documents to and from a server. The user is capable of storing the user content safely in a cloud server, i.e. an external server, through the cloud service. The cloud service guarantees the security of the content and allows the user to overcome anystorage shortage issue. The cloud service is also advantageous in that the user is capable of reading and modifying documents anytime anywhere.

As the interest in cloud service grows, various types of cloud services are developed and provided. The interest is directed to the content sharing for a certain user to share specific content among multiple terminals. There is therefore a need of a function dedicated to the content sharing environment in the cloud service.

### SUMMARY OF THE INVENTION

The present invention solves the above problem, and it is an object of the present invention to provide a method and apparatus for generating and using a shortcut object of a shared content that is capable of accessing the content on a reading screen, i.e. content view, of the content directly in a sand box provided by the cloud server for sharing content.

It is another object of the present invention to provide a method and apparatus for generating and using a shortcut object of a shared content that is capable of generating the shortcut object for a contentview and transmitting the shortcut object to another terminal such that the otherterminal is able to check the shared content.

In accordance with an aspect of the present invention, a shortcut object generation method of a terminal served by a cloud server includes receiving a first information related to a first content view screen presenting objects representing content stored in a cloud server; displaying the first content view screen based on the first information; detecting a input signal requesting generation of a shortcut object on the first content view screen; extracting a second information related to the shortcut object from the first information; and generating the shortcut object for providing access to a second content view screen based on the second information, wherein the shortcut object comprises an access address to request the second content view screen.

In accordance with another aspect of the present invention, a mobile terminal includes a radio communication unit which establishes a connection with a cloud server providing a cloud service; a display unit which displaysa content view screen based on a first information received from the cloud server; an input unit which performs an input function related to generating a shortcut object on a thumbnail view screen; and a control unit which controls extracting a second information related to the shortcut object from the first information and generating the shortcut object providing access to a second contentview screen based on the second information, wherein the shortcut object comprises an access address to request the second content view screen.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram illustrating the architecture of a cloud service-based content sharing system according to an exemplary embodiment of the present invention;
FIG. 2 is a block diagram illustrating the configuration of a shared content shortcut object generation apparatus according to the exemplaryembodiment of the present invention;
FIG. 3 is a flowchart illustrating the shared content shortcut object generation method of the mobile terminal using a cloud service according to the exemplaryembodiment of the present invention;
FIG. 4 is a signal flow diagram illustrating the shared content shortcut object generation and utilization method of the mobile terminal supporting a cloud service according to the exemplaryembodiment of the present invention;
FIG. 5 is a signal flow diagram illustrating the shared content shortcut object generation and utilization method of the mobile terminal supporting a cloud service according to an alternative exemplaryembodiment of the present invention;
FIG. 6 is a diagram illustrating exemplary screen images of interfaces provided in the shared content shortcut object utilization method according to the exemplaryembodiment of the present invention; and
FIG. 7 is a diagram illustrating exemplary screen images of interfaces provided in the shared content shortcut object utilization method according to the alternative exemplaryembodiment of the present invention.

### DETAILED DESCRIPTION OF THE INVENTION

Exemplary embodiments of the present invention are described with reference to the accompanying drawings in detail. Terms and words used in the specification and claims must be regarded as concepts selected by the inventor as the best method of illustrating the present invention, and must be interpreted as having meanings and concepts adapted to the scope and sprit of the present invention to understand the technology of the present invention. Therefore, the exemplary embodiment described in the specification and the constructions illustrated in the drawings correspond to only the most preferable embodiment, but do not represent all of the technical spirit of the present invention. Accordingly, it should be understood that various equivalents and modifications can substitute them at the time of filing the present invention. In the drawings, certain elements may be exaggerated or omitted or schematically depicted for clarity of the invention, and the actual sizes of the elements are not reflected. Thus, the present invention is not limited in the relative sizes of the elements and distances therebetween.

In the following description, a detailed explanation of known related functions and constructions may be omitted to avoid unnecessarily obscuring the subject matter of the present invention. The present invention may, however, be embodied in many different forms and should not be construed as limited to the exemplary embodiments set forth herein. In addition, terms described herein, which are defined with reference to the functions of the present invention, may be implemented differently depending on a user or operator's intention and practice. Therefore, the terms should be understood on the basis of the disclosure throughout the specification. The principles and features of this invention may be employed in varied and numerous embodiments without departing from the scope of the invention.

The same reference numbers are used throughout the drawings to refer to the same or like parts.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among the terms set forth herein, data refers to any kind of information processed by the device, including text and/or images received from any external entities, messages transmitted or received, and information created when a specific function is executed by the device.

In the present invention, the term "content"includesdata provided in a digital format forcode, text, voice, sound, and video and includes photo files, music files, and document files, and their execution information and supplementary information.

In the present invention, the term "sand box"includesa work space provided by a cloud server for at least one mobile terminal to share the content stored in the cloud server. Here, the sand box is aregion for storing and managing the property information of the shared content, e.g. metadata. The metadata may include content creator/sharer information, a content-shared date, a content type, a content ID, thumbnail information, absolute coordinates on a sand box reading screen, real content link information, capacity information, etc. That is, the shared content stored in the sand box islinked to the content shared in the cloud server. The real content link information can be the information on the object linked to the shared content, i.e. the real content data. Multiple sand boxes can be generated in the cloud server. The user having an access right can access the sand box to check, upload, download, edit, add to, or delete the content and content information stored in the sand box.

In the present invention, the term "content view"includes a viewer program capable of reading the shared content stored in the sand box. The content view is capable of providing a screen for reading the shared content in various sizes and shapes at a predefined region (e.g. a canvas region). Here, the content object may be provided in a shape of a thumbnail but is not limited thereto.

In the present invention, the term "content view screen"includes the screen for displaying all content items stored in a specific sand box in the form of thumbnail images within the canvas region. The contentview screen can be formed as a partial screen displaying a specific area of the contentview and a detailed view screen of the content but is not limited thereto.

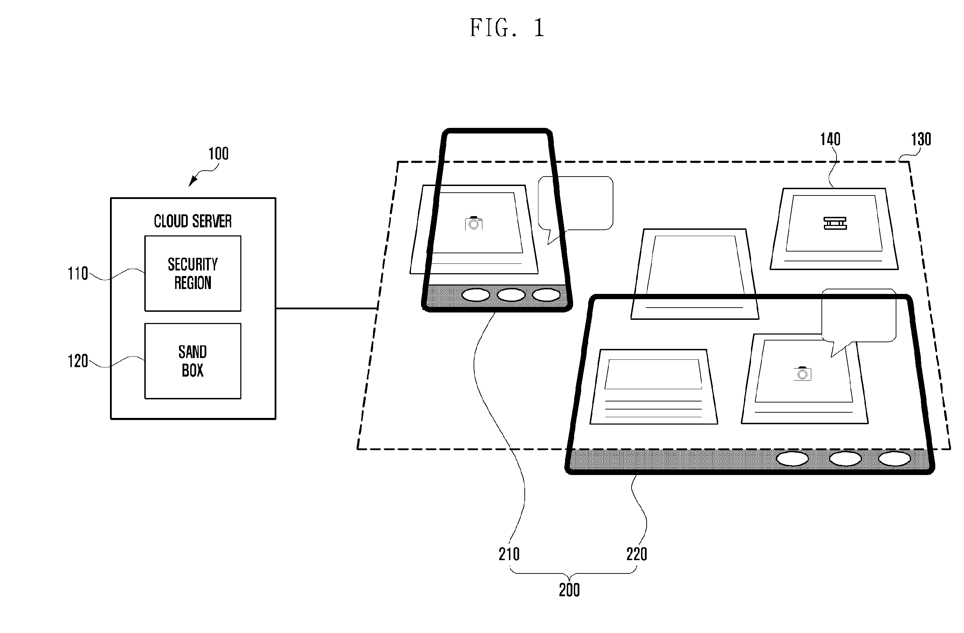

FIG. 1 is a diagram illustrating the architecture of a cloud service-based content sharing system according to an exemplary embodiment of the present invention.

Referring to FIG. 1, the cloud service-based content sharing system includes a cloud server 100 and at least one mobile terminal 200, which may include at least one of the mobile terminals 210 and 220. Here, the mobile terminal 200 and the cloud server 100 are connected to each other through a wired and/or wireless connection and/or network. Each of the mobile terminal 200 and the cloud server 100 may include a network device for supporting data communication. The cloud server 100 may be connected with at least one mobile terminal 200 and provide a cloud service, e.g. content upload, download, synchronization, and sharing services.

In the exemplaryembodiment of the present invention, the cloud server 100 is capable of allocating at least one storage space to the mobile terminal 200 having an access right (e.g. associated with a user of the mobile terminal subscribed to the cloud service account). The user of the mobile terminal 200 having the access right accesses the storage space allocated by the cloud server 100 to upload, download, edit, add to, and/or delete content items. In the exemplaryembodiment of the present invention, the cloud server 100 is capable of providing a plurality ofmobile terminals with a security region 110 storing the content and allowing for access of the mobile terminal having the access right to stored content, and a sharing region 120 for use in sharing data among a plurality ofmobile terminals (hereinafter, referred to as a sand box).

Here, the sand box 120 is a working space for use in sharing data stored in the cloud server 100 by at least one mobile terminal. The sand box 120 is the region for storing and managing content and the property information of the shared content, e.g. metadata. The metadata may include a content creator/sharer, a content-shared date, a content type, a content ID, thumbnail information, absolute coordinates on a sand box reading screen, real content link information, capacity information, etc. The shared content stored in the sand box 120 can be the real content stored in the security region 110 and links to the content.

The cloud server 100 configures a content view 130 of the shared content stored in the sand box 120 and provides the mobile terminal 200 with the content view information, e.g. content view configuration information and meta data of the shared content. Here, the content view 130 is the screen for displaying the content objects 140 corresponding to the shared content 140 in various sizes and shapes. The content object 140 can be presented in the form of a thumbnail, or as a thumbnail having a shared content information region but not restricted thereto. The content view 130 can be configured in the state of having various content objects 140 on the canvas region as shown in FIG. 1. The canvas region can be configured to be large as compared to the screen size of the mobile terminals 200 accessing the cloud server 100. Accordingly, each of the mobile terminals 200 can display a part of the canvas region according to their screen size. Each of the mobile terminals is capable of displaying the entire canvas region by controlling the content view (e.g. with a zoom function). FIG. 1 is directed to the case where the mobile terminals 210 and 220 having displays with different sizes display only a partial portion of the entire canvas region. The user is capable of checking the properties, detailed information, and user history of the shared content in the sand box 120 on the content view screen of a respectivedisplay unit of each mobile terminal 200.

The mobile terminal 200can be any of a laptop computer, a smartphone, a tablet PC, a cellular communication terminal, a handheld PC, a Portable Multimedia Player (PMP), and a Personal Digital Assistant (PDA) supporting a cloud service. The shortcut object generation method and apparatus according to the exemplaryembodiment of the present invention is not limited to aportable terminal. For example, the content shortcut object generation method and apparatus for a cloud service according to the exemplaryembodiment of the present invention can be applied to a smart TV and a desktop computer.

The mobile terminal 200 is capable of accessing the cloud server 100 to upload and download content items. The mobile terminal 200 is capable of sending, to the cloud server 100, an access request message with the address (e.g. a URL, an IP address, etc.) of the cloud server 100 for accessing the cloud server 100. The cloud server 100 performs a user equipment (UE) authentication procedure (e.g. checking a cloud service account ID and password entry against stored authentication information) to allow for access of the mobile terminal 200 having anaccess right. The mobile terminal 200 is capable of accessing the cloud server 100 to receive the content view screen configuration information and metadata of the content shared in the sand box 120. The mobile terminal 200 is capable of displaying the thumbnail view screen on the display unit of the mobile terminal 200 based on the received content view screen configuration information.

In the exemplaryembodiment of the present invention, the mobile terminal 200 is capable of generating the shortcut object for access to the content view screen based on the metadata of the shared content and content view screen configuration information. The mobile terminal 200 is capable of generating at least one of a shortcut object for providing access to the overall content view screen, a shortcut object for providing access to a specific content object screen displayed on the content view screen, and a shortcut object providing access to the detail view of a specific content object. The shortcut object can be generated based on the content view screen configuration information and metadata information of the content. The shortcut object can be generated in the form of an icon or an address link (e.g. a URL object) but is not limited thereto.

The mobile terminal 200 is capable of generating shortcut objects and accessing the overallcontent view screen, a specific content object screen, and a specific content-detailed view screen directly using the shortcut objects. The mobile terminal 200 is capable of transmitting the shortcut objects to other mobile terminals, connected through a network and/or the cloud server 100, to share the content stored in the cloud server 100.

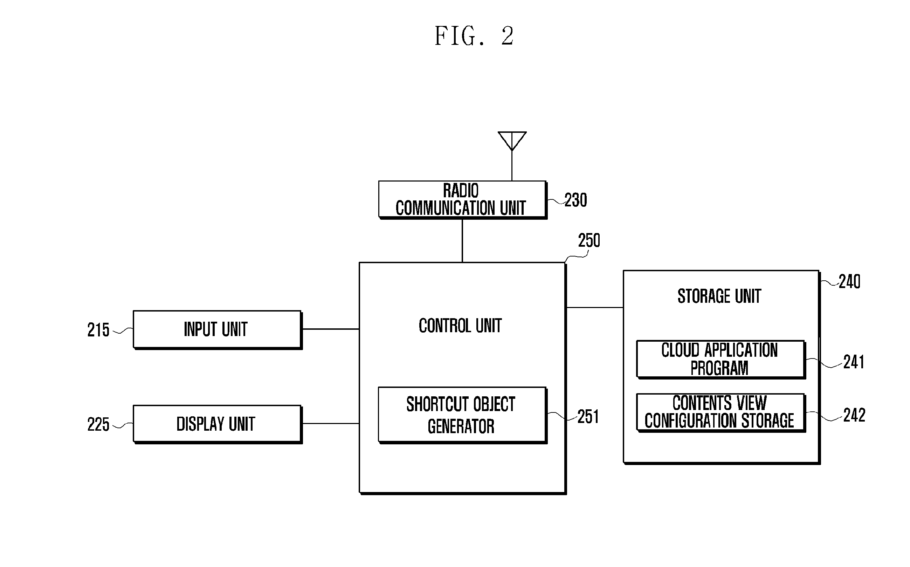

FIG. 2 is a block diagram illustrating the configuration of a shared content shortcut object generation apparatus according to the exemplaryembodiment of the present invention.

Referring to FIG. 2, the mobile terminal 200 according to the exemplaryembodiment of the present invention includes an input unit 215, a display unit 225, a radio communication unit 230, a storage unit 240, and a control unit 250.

The input unit 215may include a module related to the input of information, data, and selections to the mobile terminal 200. The input unit 215generates signals for configuring and controlling functions of the mobile terminal 200 and inputting characters and data to the control unit 250 in response to the user's manipulation. The input unit 215can be implemented as at least one of a touch pad, a touchscreen, a normal a keypad, a QWERTYkeypad, and function keys configured for executing special functions.

The input unit 215is capable of generating input signals for accessing the cloud server 100, entering authentication information, selecting a specific sand box 120, generating a shortcut object on the contentview screen 130, sharing a shortcut object, requesting the cloud server 100 for a content view control right key, and inputting a user control input signal or command for a content view to the control unit 250. The user control input signal may include at least one of a signal for a content reading screen zoom function, a content move function, a content resizing function, a content control menu function (e.g. adding and selecting), and a sand box management function.

The display unit 225is capable of displaying the informationinput by the user and presented to the user as well as menus of the mobile terminal 200. The display unit 225is capable of displaying various screens in association with the operation of the mobile terminal 200. The display unit 225is capable of displaying an idle mode screen, a menu screen, a messaging composition screen, a call progress screen, a game screen, a music playback screen, a motion picture display screen, etc. The display unit 225is capable of being implemented with a flat panel display such as a Liquid Crystal Display (LCD), an Organic Light Emitted Diode (OLED), and an Active Matrix OLED (AMOLED).

In the case of being implemented with the LCD or OLED capable of operating as a touchscreen, the display unit 225is capable of integrating an input device. In the case that the display unit 225is implemented in the form of a touchscreen, the display unit 225includes a touch panel for detecting a touch gesture. The touch panel is capable of converting pressure or a change in the capacitance detected at a position on the screen to an electrical input signal. The touch panel can be any of a resistive type, a capacitive type, an electromagnetic induction type, and pressure type touch panels. The touch panel can be configured to detect a change in pressure as well as a location and a size of the touched area. If a touch gesture is made on the touch panel, the touch panel generates and sends the corresponding input signal to the control unit 250. The control unit 250 checks the touch input signalto perform a corresponding function.

According to the exemplaryembodiment of the present invention, the display unit 225is capable of displaying the content view screen provided by the cloud server 100 under the control of the control unit 250. The display unit 225is capable of displaying various screen interfaces provided in association with the use of the cloud server 100. In particular,in the exemplaryembodiment of the present invention, the display unit 225is capable of providing screen interfaces associated with shortcut object generation and use in the content view 130. For example, the display unit 225is capable of displaying a shortcut object configuration screen, a content reading screen, a zoom function support screen, a content movement function support screen, a content size resizing function support screen, a content control support screen including an add and selecting menu function, and a sand box operation function support screen.

The radio communication unit 230 is responsible for radio communication of the mobile terminal 200. The radio communication unit 230 is capable of establishing a communication channel with a mobile communication network to perform a voice communication, a video communication, and a data communication. The radio communication unit 230 may include a Radio Frequency (RF) transmitter for up-converting and amplifying the signal to be transmitted and an RF frequency receiver for low noise amplifying and down converting the received signal.

In the exemplaryembodiment of the present invention, the radio communication unit 230 is capable of performing a communication of at least one content item with an external server (e.g. the cloud server 100). The radio communication unit 230 is capable of establishing a communication channel with the cloud server 100 under the control of the control unit 250. The radio communication unit 230 may include a communication module allowing for access to anetwork or establishing connection with a network via a network entity. The radio communication unit 230 may also include a cellular communication module (e.g. a ThirdGeneration (3G) mobile communication module, a 3.5G mobile communication module, a 4G mobile communication module, etc.), a local area network communication module (e.g. a wireless technology module using WI-FL, a wireless technology for data exchange over a computer network, commercially available from the WI-FL ALLIANCE), and a digital broadcast module (e.g. a DMB module).

In the exemplaryembodiment of the present invention, the radio communication unit 230 is capable of transmitting and receiving authentication information in acloud server access procedure. The radio communication unit 230 is also capable of transmitting and receiving information for a content view screen editing control right information key or a reading right information key to and from the cloud server 100.

The storage unit 240 is capable of storing an Operating System (OS) of the mobile terminal 200 and various applications and data generated in the mobile terminal 200. The data includes all the types of data generated by the applications running on the mobile terminal 200 and received from an external entity (e.g. an external server, another mobile terminal, a personal computer, etc.). The storage unit 240 is also capable of storing various settings associated with the user interfaces and function executions.

In the exemplaryembodiment of the present invention, the storage unit 240 may include a cloud application program 241 and a content view configuration storage 242. The cloud application program 241 may include a routine of supporting access to the cloud server 100, a routine for uploading and downloading content to and from the cloud server 100, and a routing for receiving the content view screen from the cloud server 100.

The content view configuration storage 242 is capable of storing the content view screen configuration informationand metadata of the content that are received from the cloud server 100. The content view screen configuration information and metadata of the shared content includes content creator/sharerinformation, a content-shared date, a content type, a content ID, thumbnail information, absolute coordinates on a sand box reading screen, real content link information, capacity information, etc. The content view configuration storage 242 is capable of storing the detailed view information on specific content in executing the cloud service-based content view function.

The control unit 250 controls overall operations of the mobile terminal 200 and signaling among the internal components of the mobile terminal 200, and executes functions for processing data. The control unit 250 is also capable of controlling a power supply from a battery or other power sources to the internal components of the mobile terminal 200. The control unit 250 is also capable of executing various applications stored in the storage unit 240.

According to the exemplaryembodiment of the present invention, the control unit 250 is capable of controlling the operations related to the execution of the present invention. According to the exemplaryembodiment of the present invention, if a cloud server connection request signal is input through the input unit 215, the control unit 250 controls the connection procedure using the address information of the cloud server 100. At this time, the control unit 250 is capable of controlling the display unit 225to display a menu item or icon widget allowing for a cloud server access request to be generated and processed.

Once the connection to the cloud server 100 has been established, the control unit 250 is capable of displaying the content view screen based on the content view configuration information provided by the cloud server 100. The control unit 250 is also capable of controlling the functions of generating the shortcut objects for usein the content view screen and sharing the generated shortcut objects.

The mobile terminal 200 according to the exemplaryembodiment of the present invention includes a shortcut object generator 251, included in the control unit 250, for supporting the above described functions. The shortcut object generator 251 is capable of extracting information for use in generating the shortcut objects from the metadata of the content and the content view screen configuration information. The shortcut object generator 251 is capable of extracting the address of the cloud server 100 storing the content of which a shortcut object is to be generated, a name of the sand box 120, a name of the content, and a content sharer from the content vie configuration storage 242.

The shortcut object generator 251 is capable of generating shortcut objects allowing for calling the overall content view screen, a partial content view screen, and a detailed content information view screen based on the extracted information. That is, the shortcut object generator 251 is capable of generating at least one of an object for providing direct access to the overall content view screen, an object for providing direct access to a specific object screen included in the content view screen, and an object providing direct access to a detailed view screen of a specific object. The shortcut object can be implemented in the form of an icon or an address link object (e.g. a URL link) but is not limited thereto. For example, in the case that the shortcut object is implemented in the form of a URL link, the shortcut object can be formatted as shown in Table1.

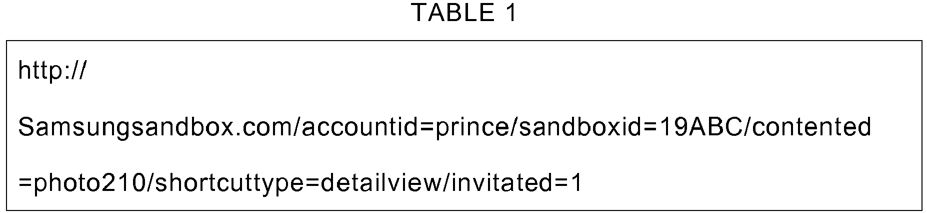

The shortcut URL link may include a protocol name, an address of the cloud server 100 storing the content, server account information, a sand box name, a shared content name, shortcut object type information, sharer information, sand box invitation information, etc. For example, the server account information can be the ID of the user who has created the sand box 120. The sand box invitation information can be the number of sharers of the sand box 120 or the number of persons invited to share the content with the shortcut object. The shared content name can be aunique ID of the content. The shortcut object type information can be the information indicating whether the object is forcalling the overall content view, a specific part view, or a detailed content information view. The sand box name can be a unique ID of the sand box 120.

As described above, the mobile terminal 200 according to the exemplaryembodiment of the present invention is capable of accessing the content view screen provided by the cloud server 100 directly through the shortcut object. Here, accessing the content view screen includesrequesting the cloud server 100 to transmit the content view screen. The mobile terminal 200 receives the content view screen configuration information corresponding to the shortcut object and controls the display unit 225to display the corresponding content view screen. In addition, the user is capable of providing other terminals, such as any of the terminals 210, 220, with the shortcut object through a messaging function, an email function, or a social networking service (SNS) function.

The mobile terminal 200 according to the exemplaryembodiment of the present invention may also include other components such as a sensor module for detecting a change of the location of the mobile terminal 200, a GPS module for determining the geographic position of the mobile terminal 200, a camera module, etc. The internal components of the mobile terminal 200 can be selectively omitted or replaced with their equivalents or other components with identical, similar, or different functions. Also, the input unit 215according to the exemplaryembodiment of the present invention can be implemented by at least one of a touchscreen, a key pad, a touch pad, and a trackball.

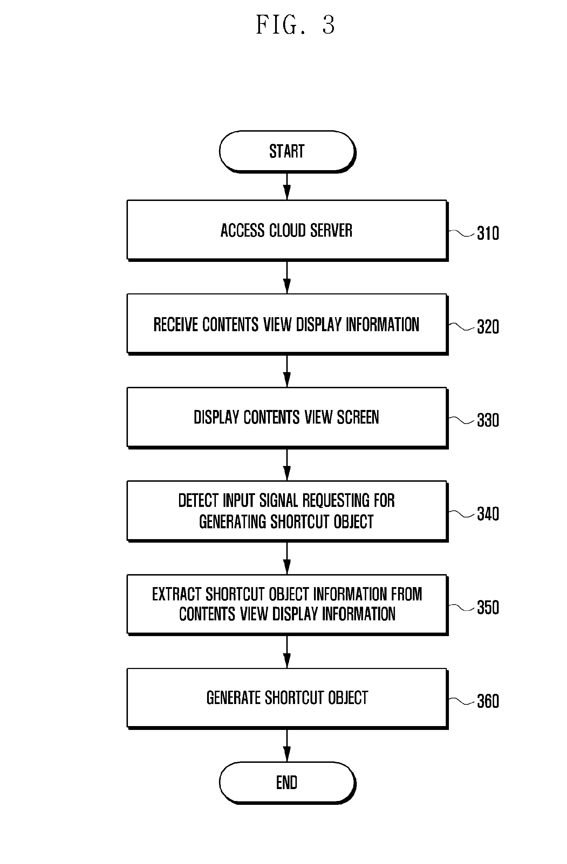

FIG. 3 is a flowchart illustrating the shared content shortcut object generation method of the mobile terminal 200 using a cloud service according to the exemplaryembodiment of the present invention.

Referring to FIG. 3, the control unit 250 connects to and accesses the cloud server 100 by using the radio communication unit 230 at step 310. In order to accomplish this, the control unit 250 is capable of transmitting to the cloud server 100 a connection request message with the address of the cloud server 100 (e.g. a URL, an IP address, etc.). The cloud server 100 performs a procedure of authenticating the mobile terminal 200 (e.g. entry of the cloud service account ID and password) to accept the access of the mobile terminal 200 having the access right.

Once the mobile terminal 200 has connected to the cloud server 100, the control unit 250 receives the information on the content view display information related to a specific sand box 120 at step 320. The content view display information is the information provided by the cloud server 100 and may include the content view screen configuration information and metadata of the shared content. The content view information may include a content creator/sharer, a content-shared date, a content type, a content ID, thumbnail information, absolute coordinates on a sand box reading screen, real content link information, capacity information, etc.

In the case that multiple sand boxes 120 exist in the accessed cloud server 100, the cloud server 100 is capable of presenting a sand box list, for example, by displaying the sand box list to the user through the display unit 225 of the mobile terminal 200, and providing the user of the accessing mobile terminal 200 with the content view display information on the sand box 120 selected from the list. The thumbnail view screen is a screen for displaying the content items stored in a specific sand box 120 of the cloud server 100 in the form of thumbnails. At this time, the content view screen provided by the cloud server 100 can be the content view screen in the state of being used finally by the connected mobile terminal 200. In the case that the sand box 120 is shared among multiple users, the content view screen can be the content view screen in the state updated by at least one other mobile terminal, such as the mobile terminals 210, 220. The content view screen is capable of displaying the content objects in different shapes and colors differentiating among the photo content, document content, motion picture content, and audio content. The content view screen is capable of displaying the thumbnail images different in shape or color according to the properties of the uploaded content such as data sizes, upload dates, numbers of downloads, and numbers of searches.

The control unit 250 is capable of controlling the display unit 225in step 330 to display the content view screen configured based on the content view screen display information.

The control unit 250 is capable of detecting auser input signal in step 340 requesting generation of a shortcut object. For example, the user is capable of requesting the displaying of the shortcut object generation menu on the content view screen and selecting the shortcut generation key from the displayed shortcut object generation menu. The control unit 250 detects the shortcut generation key input signal and determines whether a shortcut object generation is requested. The control unit 250 is also capable of determining the type of the shortcut object based on the user input signal. The control unit 250 is also capable of determining whether the object is foraccessing an overall content view screen of a specific sand box 120, accessing a position of a specific content item, or accessing a detailed view screen of a specific content.

If the type of the shortcut object is determined, the control unit 250 extracts the object information from the content view display information according to the type of the determined shortcut object at step 350. For example, if the shortcut object is anobject for providing access to the overall content view of a specific sand box 120, the control unit 250 extracts the cloud server information, sand box name information, and account information. If the shortcut object is anobject for providing access to the screen of a position of a specific content, the control unit 250 extracts the content identity information and content position information as well as the cloud server information, account information, sand box name information, and account information.

The control unit 250 generates a shortcut object based on the extracted information at step 360. The shortcut object can be a URL object or an icon having an address directly accessible using a specific screen. The control unit 250 is capable of generating at least one of a shortcut object providing access to the overall content view screen of a specific sand box 120, a shortcut object providing access to a position of a specific object included in the overall content view screen, and a shortcut object providing access to a detailed view screen of a specific object.

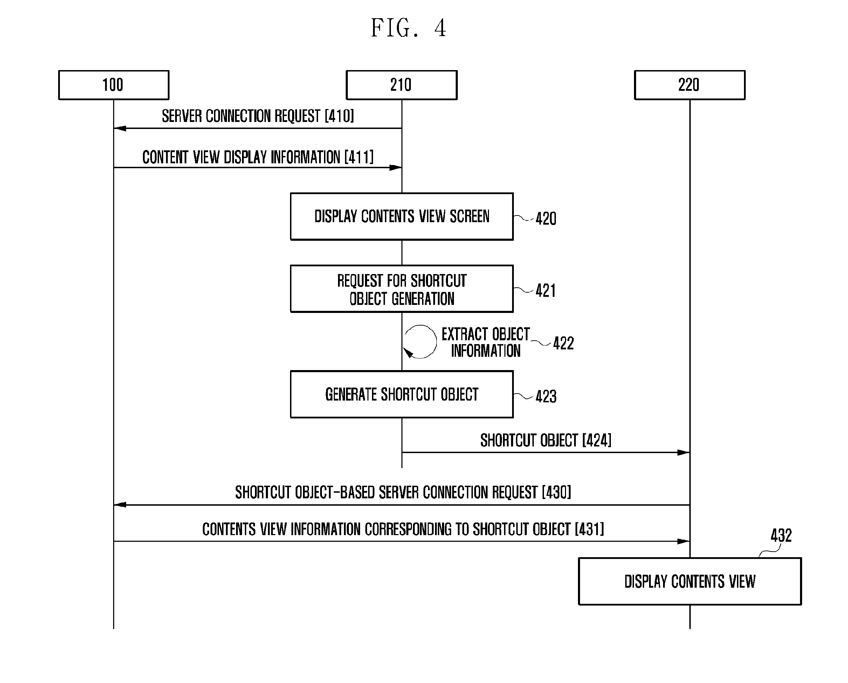

FIG. 4 is a signal flow diagram illustrating the shared content shortcut object generation and utilization method of the mobile terminal 200 supporting a cloud service according to the exemplaryembodiment of the present invention.

Referring to FIG. 4, the first mobile terminal 210 connects to the cloud server 100 at step 410. The first mobile terminal 210 connects to the cloud server 100 by using the radio communication unit 230 of the first mobile terminal 210, and the cloud server 100 performs a terminal authentication procedure. For authentication, the first mobile terminal 210 transmits and presents the authentication information (e.g. an ID, a password, etc.) to the cloud server 100, and the cloud server 100 verifies the validity of the authentication information and, if the authentication is valid, permits the access of the first mobile terminal 210 to the content in the cloud server 100.

If the first mobile terminal 210 is connected to the cloud server 100, the cloud server 100 sends the first mobile terminal 210 the content view display information on a specific sand box 120 at step 411. If there are a plurality of sand boxes 120 in the cloud server 100, the cloud server 100 presents a sand box list and provides the content view display information of a specific sand box 120 selected from the list. The content view display information may include the content view screen configuration information and metadata of the shared content. The content view display information may include a content creator/sharer, a content-shared date, a content type, a content ID, thumbnail information, absolute coordinates on a sand box reading screen, real content link information, capacity information, etc.

The first mobile terminal 210 is capable of displaying the content view screen on the display unit 225 of the first mobile terminal 210based on the content view display information at step 420. The first mobile terminal 210 is capable of detecting the user input signal requesting shortcut object generation at step 421. For example, the user is capable of requesting the displaying of a menu screen on the content view screen and selecting a shortcut generation key on the menu screen, to generate the input signal corresponding to the request. If an input signal is detected, the first mobile terminal 210 determines whether the input signal is the shortcut object generation request signal. The menu screen can be provided in the form of a popup window on the content view screen, a sand box list screen, an overall content view screen, or a detailed content view screen, but is not limited thereto.

The first mobile terminal 210 is capable of extracting the information on the object from the content display information at step 422. The object information can be extracted from the content display information, e.g. HTML code specifying the display elements and information of and/or constituting the content view screen. The first mobile terminal 210 is capable of generating a shortcut object based on the extracted information at step 423. The short object can be a URL link object or an icon having the address information to access the content view screen, but is not limited thereto.

If the shortcut object is generated, the first mobile terminal 210 sends the shortcut object to the second mobile terminal 220 at step 424. The first mobile terminal 210 is capable of sending the shortcut object to the second mobile terminal 220 through a text message, an email, or an SNS. The second mobile terminal 220 is capable of loading a content view screen using the received shortcut object. That is, the second mobile terminal 220 is capable of requesting connection to the cloud server 100 using the shortcut object at step 430. The cloud server 100 is capable of sending the second mobile terminal 220 the content view display information corresponding to the shortcut object at step 431 in response to the request sent at step 430. The second mobile terminal 220 is capable of displaying the content view screen corresponding to the shortcut object on the display unit 225 of the second mobile terminal 220 based on the content view display information without the authentication procedure at step 432.

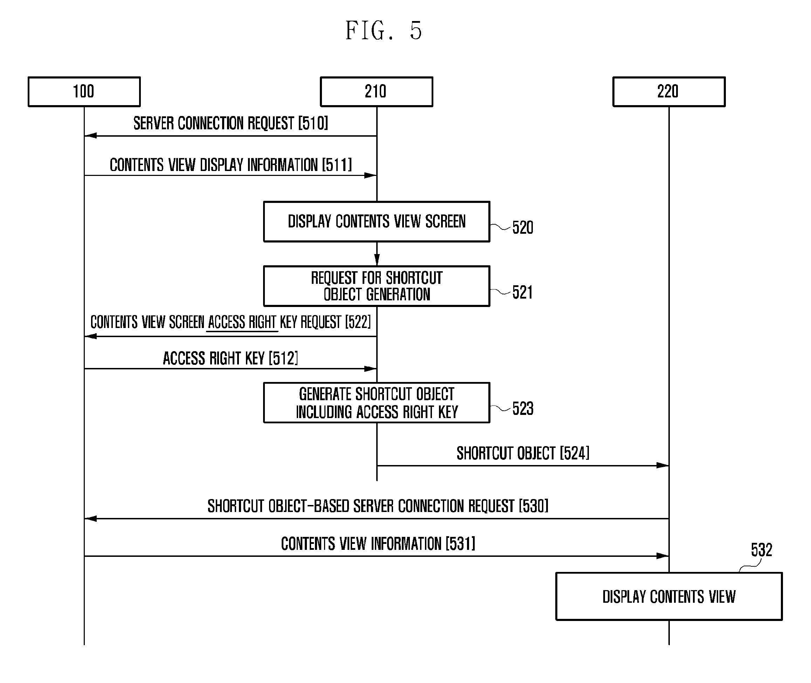

FIG. 5 is a signal flow diagram illustrating the shared content shortcut object generation and utilization method of the mobile terminal 200 supporting a cloud service according to an alternative exemplaryembodiment of the present invention.

Referring to FIG. 5, the first mobile terminal 210 connects to the cloud server 100 at step 510. The first mobile terminal 210 is capable of connecting to the cloud server 100 by using the radio communication unit 230 of the first mobile terminal 210, and the cloud server 100 performs a terminal authentication procedure. For authentication, the first mobile terminal 210 presents the authentication information (e.g. an ID and a password) to the cloud server 100, and the cloud server 100 checks the validity of the authentication information. If the authentication information is valid, the cloud server 100 permits the connection of the first mobile terminal 210 to the cloud server 100.

If the first mobile terminal 210 is connected to the cloud server 100, the cloud server 100 sends the first mobile terminal 210 the content view display information on a specific sand box 120 at step 511. If there are a plurality of sand boxes 120 in the cloud server 100, the cloud server 100 presents a sand box list and provides the content view display information on the sand box 120 selected from the list. The content view display information may include the content view screen configuration information and metadata of the shared content. The content view display information may include a content creator/sharer, a content-shared date, a content type, a content ID, thumbnail information, absolute coordinates on a sand box reading screen, real content link information, capacity information, etc.

The first mobile terminal 210 is capable of displaying the content view screen on the display unit 225of the first mobile terminal 210 based on the content view display information at step 520. The first mobile terminal 210 is capable of detecting the user input signal requesting shortcut object generation at step 521. For example, the user is capable of requesting the displaying of a menu screen on the content view screen and selecting a shortcut generation key on the menu screen, to generate the input signal corresponding to the request. If an input signal is detected, the first mobile terminal 210 determines whether the input signal is the shortcut object generation request signal.

The first mobile terminal 210 requests the cloud server 100 for a content view screen access right key information at step 522. The access right key information can be the content view screen edit control right information or a content view reading right information. The edit control right information is the right key information allowing for performing content functions such as delete, move, add, and copy; and the reading right information is the right key information allowing for only the access of the first mobile terminal 210 to the cloud server 100 to read the content view screen.

The cloud server 100 sends the first mobile terminal 210 the access right key at step 512. The access right key can be provided in response to the identity information of the user to share the content or in the form of a comprehensive right key allowing for use by a plurality of mobileterminals.

The first mobile terminal 210 generates a shortcut object including the access right key at step 523. For this purpose, the first mobile terminal 210 is capable of extracting object informationfrom the content view display information to generate the shortcut object. The first mobile terminal 210is also capable of extracting the object information from HTML code information specifying the display elements and information of and/or constituting the content view screen.

If the shortcut object is generated, the first mobile terminal 210 sends the shortcut object to the second mobile terminal 220 at step 524. The first mobile terminal 210 is capable of sending the shortcut object to the second mobile terminal through a text message, anemail, or an SNS. The second mobile terminal 220 is capable of loading a content view screen using the received shortcut object. That is, the second mobile terminal 220 is capable of requesting a connection to the cloud server 100 using the shortcut object at step 530. The second mobile terminal 220 is allowed access to the cloud server 100 with the access right key included in the shortcut object. The cloud server 100 sends the second mobile terminal 200 the content view display information corresponding to the shortcut object at step 531. The second mobile terminal 220 displays the content view screen corresponding to the shortcut object on the display unit 225 of the second mobile terminal 220 based on the content view display information without the authentication procedure at step 532. In the case that the shortcut object includes the edit control right key, the second mobile terminal 220 is capable of editing, e.g. deleting, moving, and adding, the content on the content view screen. In the case that the shortcut object includes the reading right key, the second mobile terminal 220has no right fordeleting, moving, and adding content but only has a right for displaying the content view screen.

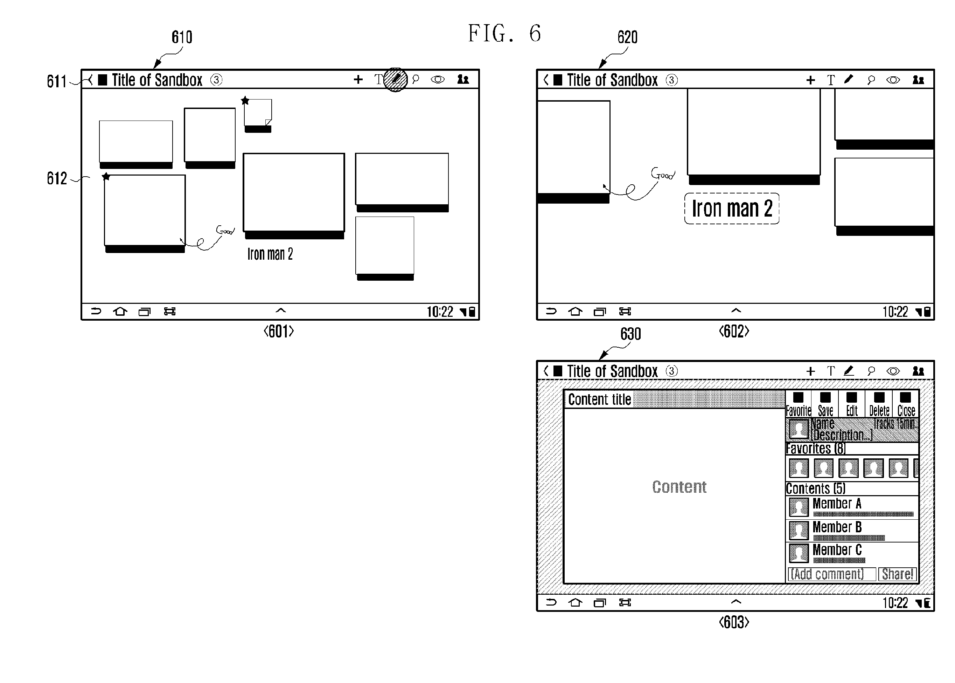

FIG. 6 is a diagram illustrating exemplary screen images of interfaces provided in the shared content shortcut object utilization method according to the exemplaryembodiment of the present invention.

Referring to FIG. 6, the mobile terminal 200 according to the exemplaryembodiment of the present invention is capable of loading the content view screen corresponding to a shortcut object. In particular, if a user input signal for selecting a shortcut object is detected, the mobile terminal 200 accesses the cloud server 100 based on the access address included in the shortcut object. The cloud server 100 sends the mobile terminal 200 the content view display information corresponding to the access address such that the mobile terminal 200 displays the content view screen corresponding to the shortcut object based on the content view display information.

For example, in a screen image 601, the content view screen 610 may include a menu region 611 for providing various menu items and a view region 612 for displaying objects corresponding to the content. Themenu region 611 may include a content add menu item, a text box add menu item, a writing input menu item, a search menu item, a view mode switching item, and a shared user list display menu item, but is not limited thereto. In the view region 612, the objects representing the content stored in a specific sand box 120 in the cloud server 100 are arranged in different sizes and shapes.

According to the exemplaryembodiment of the present invention, the mobile terminal 200 is capable of providing an overall content view screen of a specific sand box 120 as shown in the screen image 601 of FIG. 6 according to the type of the shortcut object. The mobile terminal 200 is also capable of providing a partial content view screen for displaying a part of the canvas area of the overall content view as shown in the screen image 602 of FIG. 6. At this time, the view region may provide the screen displaying a specific content represented by a shortcut object 620. The mobile terminal 200 is also capable of providing a detailed view screen of a specific content as shown in the screen image 603 of FIG. 6 according to the type of the shortcut object 630.

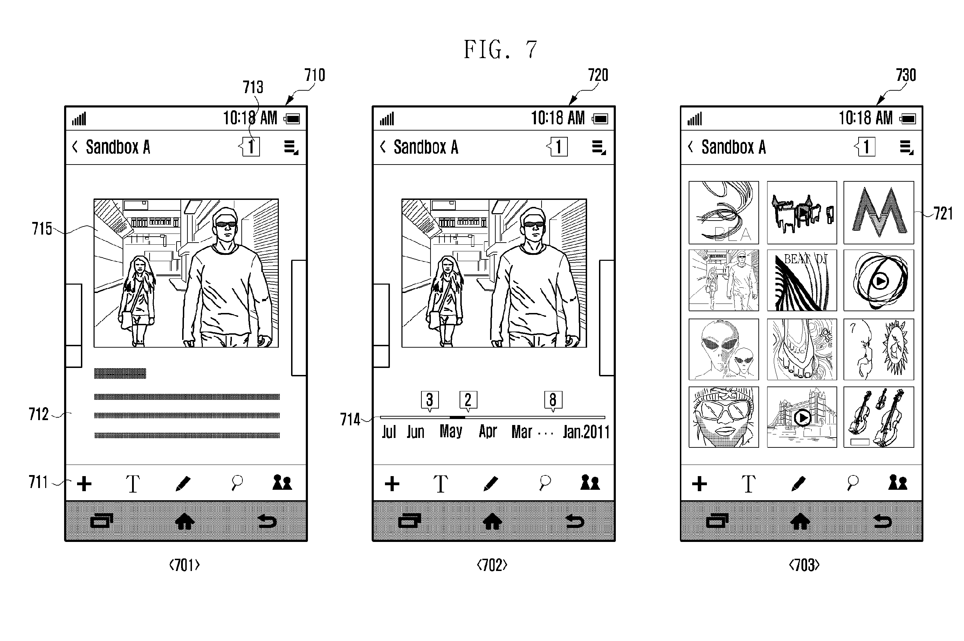

FIG. 7 is a diagram illustrating exemplary screen images of interfaces provided in the shared content shortcut object utilization method according to the alternative exemplaryembodiment of the present invention.

Referring to FIG. 7, the mobile terminal 200 according to the exemplaryembodiment of the present invention is capable of generating a shortcut object of a specific sand box 120 of the cloud server 100 in the form of a widget icon to provide the user with the information of the sand box 120 in real time. For example, the mobile terminal 200 is capable of displaying a widget icon providing direct access to the content view screen of a specific sand box 120 on the home screen. Accordingly, the user is capable of executing the widget icon corresponding to the sand box 120 on the home screen.

The mobile terminal 200 is capable of executing the widget icon to display the content view screen 710 using the access address information included in the widget icon as shown in the screen image 701 of FIG. 7. Here, the content view screen 710 may include a menu region 711 for providing various menu items and a view region 712 for displaying objects representing the content. The menu region 711 may include a content add menu item, a text box add menu item, a writing input menu item, a search menu item, a view mode switching item, and a shared user list display menu item, but is not limited thereto. In the view region 712, the objects 715representing the content shared in a specific sand box 120, such as Sandbox A, as indicated on the screen 710, are displayed.

According to the exemplaryembodiment of the present invention, the mobile terminal 200 can be configured such that, when new content is added in the sand box 120, a new content indication item 713 for indicating the number of items of new content is presented and/or displayed on the screen image 701. According to the exemplaryembodiment of the present invention, the mobile terminal 200 can be configured such that, when the new content indication item 713 is selected, a popup window displaying only the new content is presented.

According to the exemplaryembodiment of the present invention, the mobile terminal 200 is capable of presenting and/or displaying a number of sharers connected to the sand box 120 and/or names of the sharers on the contentview screen 710. According to the exemplaryembodiment of the present invention, the mobile terminal 200 is capable of providing the content view screen as a time line view screen 720 as shown in the screen image 702 of FIG. 7. The time line view screen 720 is provided with a timeline bar 714 with the indication of the number of items of content shared at certain times. According to the exemplaryembodiment of the present invention, the mobile terminal 200 is capable of providing the content view screen as a list view screen 730 as shown in the screen image 703 of FIG. 7. The list view screen 730 is ascreen displaying the content stored in the sand box 120 in the form of a list of itemsarranged in the form of thumbnail images 721 of each item of content.

As described above, the content shortcut object generation and utilization method of the present invention is capable of generating the shortcut objects providing direct access to a shared content reading screen, i.e. content view screen, so as to check and/or determine the shared content on the content view screen of a specific sand box 120 in the server 100. Also, the content shortcut object generation and utilization method of the present invention is also capable of sending the shortcut objects to other terminals such that the other terminals can check and/or determine the shared content on the content view screen corresponding to the shortcut object. Also, the content shortcut object generation and utilization method of the present invention is capable of sharing content by transmitting only the shortcut objects rather than the real content represented by the shortcut objects, resulting in improvement of resource utilization efficiency.

The above-described apparatus and methods according to the present invention can be implemented in hardware or firmware, or as software or computer code, or combinations thereof. In addition, the software or computer code can also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magnetooptical disk or computer code downloaded over a network originally stored on a remote recording medium, a computer readable recording medium, or a non-transitory machine readable medium and to be stored on a local recording medium, so that the methods described herein can be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include volatile and/or non-volatile storage and memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any medium such as communication signals transmitted by wire/wireless connections, and their equivalents. The programs and computer readable recording medium can also be distributed in network-coupled computer systems so that the computer readable code is stored and executed in a distributed fashion.

Although the cloud service-based content shortcut object generation and utilization method and apparatus according to the preferred embodiments are described with specific details set forth in order to provide a thorough understanding of the present invention, it will be understood by one skilled in the art that the principles of the present invention may be practiced with substitutes for the parts described or with other equivalents thereof.

## Claims

1. A shortcut object generation method of a terminal served by a cloud service equipment, the method comprising:
receiving a first information related to a first content view screen including at least of object corresponding to content stored in the cloud service equipment service equipment;
displaying the first content view screen based on the first information;
detecting an input signal requesting generation of a shortcut object on the first content view screen;
extracting a second information related to the shortcut object from the first information; and
generating the shortcut object for providing access to a second content view screen based on the second information;
wherein the shortcut object comprises an access address to request the second content view screen.

2. The method of claim 1, wherein the cloud service equipment includes a first storage space for storing content data of the content, and a second storage space for storing properties of the content; and
wherein the first content view screen includes a plurality of objects corresponding to the properties stored in the second storage space of the cloud service equipment.

3. The method of claim 1, wherein receiving the first information comprises:
receiving a configuration information of the first content view screen and metadata of the content; and
storing the first content view screen configuration information and the metadata of the content.

4. The method of claim 1, wherein the first information comprises at least one of a content creator and sharer, a content share date, a content type, a content identifier, content location coordinates in the first content view screen, a storage space address, a storage space name, and a content name.

5. The method of claim 1, wherein detecting the input signal comprises:
displaying a shortcut object generation menu on the first content view screen; and
detecting the input signal selecting a type of the shortcut object from the shortcut object generation menu.

6. The method of claim 1, wherein the second information comprises at least one of an address of the cloud service equipment providing storage space of the content, a storage space name, a content name, a shortcut object type, a content sharer identifier, and a short objector sharer identifier.

7. The method of claim 1, wherein the shortcut object comprises at least one of an icon and an access address link; and
wherein generating the shortcut object comprises generating at least one of a shortcut object providing access to the first content view screen, a shortcut object providing access to a screen of a specific object included in the first content view screen, and a shortcut object providing access to a detail view screen of the specific object.

8. The method of claim 1, wherein the second content view screen is one of a screen displaying the first content view screen entirely, a screen displaying a specific part of the first content view screen, and a detailed view screen of the content.

9. The method of claim 1, wherein extracting the second information comprises:
requesting the cloud service equipment for access right key information for the content view screen; and
receiving the access right key information from the cloud service equipment; and
wherein generating the shortcut object comprises inserting the access right key information into the shortcut object.

10. The method of claim 9, wherein the access right key information comprises at least one of editing control right key information on the content view screen and a reading right key information on the content view screen.

11. A mobile terminal comprising:
a radio communication unit which establishes a connection with a cloud service equipment providing a cloud service;
a display unit which displays a content view screen including at least of corresponding to content based on a first information received from the cloud service equipment;
an input unit which performs an input function related to generating a shortcut object on a content view screen; and
a control unit which controls extracting a second information related to the shortcut object from the first information and generating the shortcut object for providing access to a second content view screen based on the second information;
wherein the shortcut object comprises an access address to request the second content view screen.

12. The mobile terminal of claim 11, wherein the radio communication unit receives a first content view screen configuration information, metadata of the content, and access right key information for the first and second content view screens from the cloud service equipment.

13. The mobile terminal of claim 11, wherein the first information comprises at least one of a content creator and sharer, a content share date, a content type, a content identifier, content location coordinates in the first content view screen, a storage space address, a storage space name, and a content name.

14. The mobile terminal of claim 11, wherein the control unit extracts at least one of an address of the cloud service equipment providing storage space of the content, a storage space name, a content name, a shortcut object type, a content sharer identifier, and a short objector sharer identifier from the first information.

15. The mobile terminal of claim 11, wherein the control unit controls generating at least one of a shortcut object providing access to the first content view screen, a shortcut object providing access to a screen of a specific object included in the first content view screen, and a shortcut object providing access to a detail view screen of a specific object, with the shortcut object comprising at least one of an icon and an access address link.
